(19) Europäisches Patentamt
European Patent Office
Office européen des brevets

(11) EP 1 288 246 B1

(12) EUROPÄISCHE PATENTSCHRIFT

(45) Veröffentlichungstag und Bekanntmachung des Hinweises auf die Patenterteilung:
**06.10.2004 Patentblatt 2004/41**

(51) Int Cl.⁷: **C08G 77/54**, C08G 77/388, C08L 83/14, C08L 83/08

(21) Anmeldenummer: **02016347.3**

(22) Anmeldetag: **25.07.2002**

(54) **Quaternäre Ammoniumgruppen aufweisende Organopolysiloxane und Verfahren zu deren Herstellung**

Organopolysiloxanes with quaternary ammonium groups and preparation method

Organopolysiloxanes ayant des fonctions ammonium quaternaires

(84) Benannte Vertragsstaaten:
**BE DE FR GB NL**

(30) Priorität: **14.08.2001 DE 10139963**

(43) Veröffentlichungstag der Anmeldung:
**05.03.2003 Patentblatt 2003/10**

(73) Patentinhaber: **Wacker-Chemie GmbH**
**81737 München (DE)**

(72) Erfinder:
- **Schattenmann, Wolfgang, Dr.**
  **84489 Burghausen (DE)**
- **Messner, Michael**
  **01665 Semmelsberg (DE)**
- **Minigshofer, Renate**
  **84367 Taubenbach/Reut (DE)**
- **Richter, Evelyn**
  **85354 Freising/Pulling (DE)**

(74) Vertreter: **Budczinski, Angelika et al**
**c/o Wacker-Chemie GmbH,**
**Zentralabteilung PML,**
**Hanns-Seidel-Platz 4**
**81737 München (DE)**

(56) Entgegenhaltungen:
**EP-A- 0 017 121**
**EP-A- 0 349 926**
**DE-A- 10 036 678**
**US-A- 4 833 225**
**US-A- 4 891 166**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 288 246 B1

## Beschreibung

Die Erfindung betrifft quaternäre Organopolysiloxan-Polymere und Verfahren zur Herstellung dieser Verbindungen.

Aus der Literatur sind quaternierte Polysiloxane schon lange bekannt. Für die Herstellung werden hierbei verschiedene Wege beschrieben. Exemplarisch für seitenständige quaternäre Siloxane soll DE-A-1493384 angeführt sein. Seitenständige epoxygruppenhaltige Siloxane werden mit sekundären Aminen wie Dimethylamin umgesetzt und in einem weiteren Schritt mit entsprechenden Alkylierungsmittel, wie Methylchlorid, alkyliert. $\alpha,\omega$-quaternäre Polysiloxane sind ebenfalls mehrfach beschrieben, wie z.B. in EP-A-17121, in der $\alpha,\omega$-quaternäre Polysiloxane durch Umsetzung von entsprechenden epoxyfunktionalisierten Polysiloxanen mit tertiären Aminen in Anwesenheit einer Säure hergestellt werden. Des weiteren wird in EP-A-606159 die Herstellung von $\alpha,\omega$-quaternären Polysiloxanen zum einen durch die Umsetzung von $\alpha,\omega$-chloralkylgruppenhaltigen Polysiloxanen mit tertiären Aminen und zum anderen durch die Umsetzung allylhaltiger tertiärer Amine mit Si-H-haltigen Siloxanen und anschließender Quaternierung des tertiären Stickstoffs offenbart.

Auf dem Gebiet der polyquaternären Polysiloxane, die den quaternierten Stickstoff im Siloxangerüst beinhalten, soll beispielhaft auf US-A-4,533,714 bzw. der entsprechenden DE-A 33 40 708 verwiesen werden, welche polyquaternäre Polysiloxane mit zwei quaternären Ammoniumgruppen pro Einheit beschreibt, wobei die Stickstoffatome ausschließlich über $-(CH_2)_{1-6}$-Brücken an Siliciumatome gebunden sind. Des weiteren werden im EP-A-282720 ebenfalls Polysiloxan-Polymere mit jeweils zwei quaternären Ammoniumgruppen pro Einheit offenbart, die über eine hydroxylgruppenhaltige Kohlenwasserstoffbrücke, die Sauerstoffatome oder Stickstoffatome aufweisen kann, verbunden sind.

Im Rahmen der vorliegenden Erfindung sollen von dem Begriff Organopolysiloxane sowohl polymere, oligomere wie auch dimere Siloxane mitumfaßt werden.

Gegenstand der Erfindung sind quaternäre Ammoniumgruppen aufweisende Organopolysiloxane enthaltend Einheiten der allgemeinen Formel

$$-[R^2-(SiR_2-O)_b-SiR_2-R^2-N^+R^1{}_2]_n- \quad \cdot n X^- \qquad (I'),$$

wobei
R gleich oder verschieden sein kann und einen einwertigen, SiCgebundenen, gegebenenfalls substituierten Kohlenwasserstoffrest mit 1 bis 12 Kohlenstoffatomen bedeutet,
$R^1$ gleich oder verschieden sein kann und einen einwertigen, gegebenenfalls substituierten Kohlenwasserstoffrest mit 1 bis 12 Kohlenstoffatomen bedeutet oder Bestandteil eines verbrückenden Alkylenrestes sein kann,
$X^-$ ein organisches oder anorganisches Anion darstellt,
$R^2$ einen zweiwertigen Kohlenwasserstoffrest mit mindestens 4 Kohlenstoffatomen darstellt, der mindestens eine Hydroxylgruppe enthält und von einem oder mehreren Sauerstoffen unterbrochen sein kann,
b eine ganze Zahl von 1 bis 200 ist und
n eine ganze Zahl von 1 bis 50 ist.

Bei den erfindungsgemäßen quaternäre Ammoniumgruppen aufweisenden Organopolysiloxanen kann es sich um cyclische, lineare oder verzweigte Verbindungen handeln, die außer den Einheiten der Formel (I') in der Kette beliebige andere Einheiten, wie etwa $R_3SiO_{1/2}$-, $RSiO_{3/2}$- oder $SiO_{4/2}$-Einheiten, aufweisen können, wobei R die obengenannte Bedeutung hat.

Vorzugsweise handelt es sich bei den erfindungsgemäßen quaternäre Ammoniumgruppen aufweisenden Organopolysiloxanen um solche der allgemeinen Formel

$$D^1{}_a-[R^2-(SiR_2-O)_b-SiR_2-R^2-N^+R^1{}_2]_n-D^2{}_a \quad \cdot n X^- \qquad (I),$$

wobei
R gleich oder verschieden sein kann und einen einwertigen, SiCgebundenen, gegebenenfalls substituierten Kohlenwasserstoffrest mit 1 bis 12 Kohlenstoffatomen bedeutet,
$R^1$ gleich oder verschieden sein kann und einen einwertigen, gegebenenfalls substituierten Kohlenwasserstoffrest mit 1 bis 12 Kohlenstoffatomen bedeutet oder Bestandteil eines verbrückenden Alkylenrestes sein kann,
$X^-$ ein organisches oder anorganisches Anion darstellt,
$R^2$ einen zweiwertigen Kohlenwasserstoffrest mit mindestens 4 Kohlenstoffatomen darstellt, der mindestens eine Hydroxylgruppe enthält und von einem oder mehreren Sauerstoffen unterbrochen sein kann,

a 0 oder 1 ist,
b eine ganze Zahl von 1 bis 200 ist,
n eine ganze Zahl von 1 bis 50 ist,
$D^1$ ein Wasserstoffatom, Hydroxylrest, Halogenidrest, $NH_2$-Rest oder einen einwertigen organischen Rest bedeutet und
$D^2$ eine Gruppe der Formel

$$-R^2-(SiR_2O)_b-SiR^2-R^2-D^1 \qquad (II)$$

ist mit R, $R^2$, $D^1$ und b gleich der obengenannten Bedeutung.

Bei den erfindungsgemäßen quaternäre Ammoniumgruppen aufweisenden Organopolysiloxanen der allgemeinen Formel (I) kann es sich um cyclische Verbindungen handeln, also mit a jeweils gleich 0, wie auch um lineare Verbindungen mit a jeweils gleich 1.

Bevorzugt hat a den Wert 1.

Beispiele für Reste R und $R^1$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der $\alpha$-und der $\beta$-Phenylethylrest;

Falls es sich bei den Resten R und $R^1$ um substituierte Kohlenwasserstoffreste handelt, sind als Substituenten Hydroxylgruppen bevorzugt.

Bevorzugt handelt es sich bei Rest R um Kohlenwasserstoffreste mit 1 bis 6 Kohlenstoffatomen, besonders bevorzugt um den Methylrest.

Bevorzugt handelt es sich bei Rest $R^1$ um Kohlenwasserstoffreste mit 1 bis 8 Kohlenstoffatomen, besonders bevorzugt um Alkylreste mit 1 bis 6 Kohlenstoffatomen und Benzylreste. Bei Rest $R^1$ kann es sich aber auch um einen davon abgeleiteten zweiwertigen Rest handeln, so daß beispielsweise zwei Reste $R^1$ mit dem Stickstoffatom einen Ring bilden.

Beispiele für Anion $X^-$ sind organische Anionen, wie Carboxylationen, Enolationen und Sulfonationen, sowie anorganische Anionen, wie Halogenidionen, wie z.B. Chloridionen, Bromidionen und Jodidionen, und Sulfationen.

Bevorzugt handelt es sich bei Anion $X^-$ um Carboxylationen und Halogenidionen, besonders bevorzugt um Chloridionen und Acetationen.

Beispiele für Rest $R^2$ sind zweiwertige lineare, cyclische oder verzweigte, gesättigte oder ungesättigte Kohlenwasserstoffreste mit mindestens 4 Kohlenstoffatomen, die mindestens eine Hydroxylgruppe enthalten und gegebenenfalls von Sauerstoffatomen einfach oder mehrfach unterbrochen sind, wie alle Alkylenreste mit mindestens 4 C-Atomen und mindestens einer Hydroxylgruppe, Arylenreste mit mindestens einer Hydroxylgruppe,

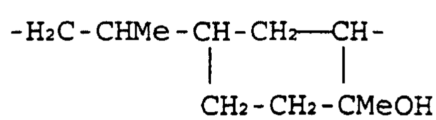

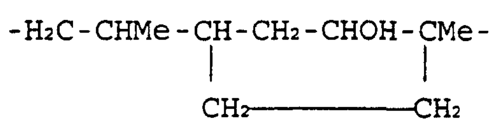

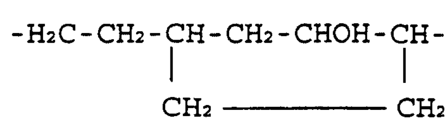

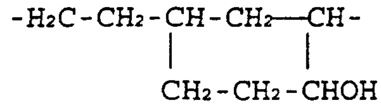

- $(CH_2)_3OCH_2$-CH(OH)-$CH_2$- und - $(CH_2)_3OCH_2$-$CH_2$-CH(OH) -, wobei Me den Methylrest bedeutet.

Bevorzugt handelt es sich bei Rest $R^2$ um Alkylenreste mit mindestens 4 C-Atomen und mindestens einer Hydroxylgruppe, - $(CH_2)_3OCH_2$-CH(OH)-CH2- und -$(CH_2)_3OCH_2$-$CH_2$-CH(OH) -, besonders bevorzugt um -$(CH_2)_3OCH_2$-CH(OH)-$CH_2$- und - $(CH_2)_3OCH_2$-$CH_2$-CH(OH)-.

Bevorzugt handelt es sich bei b um eine ganze Zahl von 1 bis 100.

Bevorzugt handelt es sich bei n um eine ganze Zahl von 1 bis 20, besonders bevorzugt von 2 bis 20.

Beispiele für Rest $D^1$ gleich organischem Rest sind Alkylreste, Alkoxyreste, stickstoffhaltige organische Reste, wie Amine, schwefelhaltige organische Reste, wie Sulfonatreste, oder an Kohlenstoff addierte organische oder anorganische Anionen, wie etwa Carboxylate und Halogenkohlenwasserstoffreste.

Bevorzugt handelt es sich bei Rest $D^1$ um Wasserstoffatom, Hydroxylrest, Alkylreste, Alkoxyreste, Aminrest, Halogenidrest, Carboxylatrest oder Enolatrest, besonders bevorzugt um Wasserstoffatom, Hydroxylrest, Aminrest, Halogenidrest, Acetat- oder Propionatrest.

Beispiele für die erfindungsgemäßen Organopolysiloxane sind cyclo- [A-$CH_2O$ $(CH_2)_3$- (Si $(CH_3)_2O)_8$-Si $(CH_3)_2$- $(CH_2)_3OCH_2$-A-$N^+(CH_3)_2]_m$ · m $Cl^-$,
mit A gleich -CH(OH)$CH_2$- oder -$CH_2$CH(OH)- und m gleich 2-4;
$A^1$-$CH_2O(CH_2)_3$-$(Si(CH_3)_2O)_8$-$Si(CH_3)_2$-$(CH_2)_3OCH_2$-A-$N^+CH_3)_2]_2$-- $Si(CH_3)_2O)_8$-$Si(CH_3)_2$-$(CH_2)_3OCH_2$-A-$A^1$ ·2 $Cl^-$,
$A^1$-[A-$CH_2O(CH_2)_3$- $(Si(CH_3)_2O)_8$-$Si(CH_3)_2$-$(CH_2)_3OCH_2$-A-$N^+(CH_3)_2]_{15}$--$Si(CH_3)_2O)_8$-$Si(CH_3)_2$-$(CH_2)_3OCH_2$-A-$A^1$ · 15 $Cl^-$ und
$A^1$-[A-$CH_2O(CH_2)_3$-$(Si(CH_3)_2O)_8$-$Si(CH_3)_2$-$(CH_2)_3OCH_2$-A-$N^+(CH_3)_2]_m$--$Si(CH_3)_2O)_8$-$Si(CH_3)_2$-$(CH_2)_3OCH_2$-A-$A^1$ · m $Cl^-$
mit A gleich -CH(OH)$CH_2$- oder -$CH_2$CH(OH)-, $A^1$ = -OH, -Cl oder -$N(CH_3)_2$ und m gleich 3-14;
cyclo-[A-$CH_2O(CH_2)_3$-$(Si(CH_3)_2O)_{50}$-$Si(CH_3)_2$- $(CH_2)_3OCH_2$-A-$N^+(CH_3)_2$]m · m $Cl^-$,
mit A gleich -CH (OH) $CH_2$- oder -$CH_2$CH(OH)- und m gleich 2 -4;
$A^1$-[A-$CH_2O(CH_2)_3$-$(Si(CH_3)_2O)_{50}$-$Si(CH_3)_2$-$(CH_2)_3OCH_2$-A-$N^+(CH_3)_2]_2$--$Si(CH_3)_2O)_8$-$Si(CH_3)_2$-$(CH_2)_3CH_2$-A-$A^1$ · 2 $Cl^-$,
$A^1$-[A-$CH_2O(CH_2)_3$-$(Si(CH_3)_2O)_{50}$-$Si(CH_3)_2$-$(CH_2)_3OCH_2$-A-$N^+(CH_3)_2]_{15}$--$Si(CH_3)_2O)_8$-$Si(CH_3)_2$-$(CH_2)_3OCH_2$-A-$A^1$ · 15 $Cl^-$ und
$A^1$-[A-$CH_2O(CH_2)_3$-$(Si(CH_3)_2O)_{50}$-$Si(CH_3)_2$-$(CH_2)_3OCH_2$-A-$N^+(CH_3)_2$]m--$Si(CH_3)_2O)_8$-$Si(CH_3)_2$-$(CH_2)_3OCH_2$-A-$A^1$ ·m $Cl^-$
mit A gleich -CH(OH) $CH_2$- der-$CH_2$CH(OH)-,$A^1$=-OH, Cl oder -$N(CH_3)_2$ und m gleich 3-14;
cyclo-[A-$CH_2O(CH_2)_3$-$(Si(-CH_3)_2O)_{50}$-$Si(CH_3)_2$-$(CH_2)_3OCH_2$-A-$CH_3N^+(CH_2)_3CH_3]_m$ · m $H_3CC_6H_5SO_3^-$,
mit A gleich -CH (OH) $CH_2$- oder -$CH_2$CH(OH)- und m gleich 2-4;
$A^1$-[A-$CH_2O(CH_2)_3$-(Si $(CH_3)_2O)_{50}$-$Si(CH_3)_2$-$(CH_2)_3OCH_2$-A-$CH_3N^+(CH_2)_3CH_3]_2$- -$Si(CH_3)_2O)_8$-$Si(CH_3)_2$-$(CH_2)_3OCH_2$-A-$A^1$ · 2 $H_3CC_6H_5SO_3^-$, $A^1$-[A-$CH_2O(CH_2)_3$-(Si $(CH_3)_2O)_{50}$-$Si(CH_3)_2$-$(CH_2)_3$ $OCH_2$-A-$CH_3N^+(CH_2)_3CH_3]_{15}$--$Si(CH_3)_2O)_8$-$Si(CH_3)_2$-$(CH_2)_3OCH_2$-A-$A^1$ ·15 $H_3CC_6H_5SO_3^-$ und
$A^1$-[A-$CH_2O(CH_2)_3$-(Si $(CH_3)_2O)_{50}$-$Si(CH_3)_2$-$(CH_2)_3OCH_2$-A-$CH_3N^+(CH_2)_3CH_3]_{m-}$ -$Si(CH_3)_2O)_8$-$Si(CH_3)_2$-$(CH_2)_3$ $OCH_2$-A-$A^1$ · m $H_3CC_6H_5SO_3^-$
mit A gleich -CH(OH)$CH_2$- oder -$CH_2$CH(OH)-, $A^1$ = -OH, - $N^+CH_3H(CH_2)_3CH_3$, -$NH(CH_2)_3CH_3$ oder -$SO_3C_6H_5CH_3$ und m gleich 3-14.

Die erfindungsgemäßen Organopolysiloxane haben bei 25°C eine Viskosität von bevorzugt 50 000 bis 5 000 000 mPas.

Die erfindungsgemäßen Organopolysiloxane haben den Vorteil, daß sie nur eine quaternäre Ammoniumgruppe pro Wiederholungseinheit aufweisen, wodurch sich der Stickstoffgehalt der erfindungsgemäßen Verbindungen äußerst flexibel einstellen läßt.

Die erfindungsgemäßen Organopolysiloxane können nach unterschiedlichen Methoden hergestellt werden. Bevorzugt werden sie durch erfindungsgemäße Umsetzung von $\alpha$, $\omega$-epoxyterminierten Organopolysiloxanen mit Stickstoffverbindungen, ausgewählt aus primären Aminen, sekundären Aminen sowie Salzen von sekundären Aminen, hergestellt, was ein weiterer Gegenstand der vorliegenden Erfindung ist.

Ein weiterer Gegenstand der vorliegenden Erfindung ist ein Verfahren (Verfahrensvariante 1) zur Herstellung der erfindungsgemäßen, quaternäre Ammoniumgruppen aufweisenden Organopolysiloxane, dadurch gekennzeichnet, daß epoxygruppenhaltiges Organopolysiloxan der Formel

$$Y\text{-}(SiR_2\text{-}O)_b\text{-}SiR_2\text{-}Y \quad (III),$$

wobei R und b die obengenannte Bedeutung haben und Y einen epoxydhaltigen Rest darstellt, direkt mit dem Salz eines sekundären Amins der Formel

$$H_2NR^1{}_2{}^+ X^- \quad (IV)$$

mit $R^1$ und $X^-$ gleich der obengenannten Bedeutung umgesetzt wird.

Bevorzugt handelt es sich bei der erfindungsgemäß eingesetzten Verbindung (IV) um Dialkylammoniumhalogenide und Dialkylammoniumcarboxylate, wobei Dimethylammoniumchlorid besonders bevorzugt ist.

Vorzugsweise werden in der erfindungsgemäßen Verfahrensvariante 1 Verbindungen der Formel (III) und der Formel (IV) in einer solchen Menge eingesetzt, daß das molare Verhältnis von Epoxygruppen Y zu Amin bevorzugt im Bereich von 1,6:1 bis 2,2:1 liegt, besonders bevorzugt gleich 2:1 ist.

Die erfindungsgemäße Verfahrensvariante 1 wird vorzugsweise in Anwesenheit von Lösungsmitteln durchgeführt.

Beispiele für solche Lösungsmittel sind polare Lösungsmittel, wie Wasser, Alkohole, Ether und Glykole, aber auch unpolare Lösungsmittel, wie Toluol, und Mischungen aus verschiedenen Lösungsmitteln, wobei polare Lösungsmittel und Mischungen davon bevorzugt und Wasser, Alkohole und Glykole sowie Mischungen davon besonders bevorzugt sind.

Falls bei der erfindungsgemäßen Verfahrensvariante 1 Lösungsmittel eingesetzt wird, handelt es sich um Mengen von bevorzugt 5 bis 50 Gewichtsprozent, besonders bevorzugt 20 bis 40 Gewichtsprozent, jeweils bezogen auf das Gesamtgewicht der Reaktionsmischung.

Die erfindungsgemäße Verfahrensvariante 1 wird bei Temperaturen von bevorzugt 60 bis 150°C, besonders bevorzugt von 60 bis 130°C abhängig vom gegebenenfalls eingesetzten Lösungsmittel, und bevorzugt bei einem Druck der umgebenenden Atmosphäre, also etwa 900 bis 1100 hPa, durchgeführt.

Die Verbindungen der Formeln (III) und (IV) sind handelsübliche Produkte bzw. nach in der Chemie üblichen Methoden herstellbar.

Vorzugsweise wird das erfindungsgemäß eingesetzte Epoxygruppen aufweisende Organopolysiloxan der Formel (III) dadurch hergestellt, daß $\alpha,\omega$-Wasserstoffpolysiloxane der allgemeinen Formel

$$H\text{-}(SiR_2\text{-}O)_b\text{-}SiR_2\text{-}H \quad (III),$$

wobei R und b die obengenannten Bedeutungen haben, mit, bezogen auf SiH-Gruppen, äquimolaren Mengen eines Epoxides, welches endständige, aliphatische Kohlenstoff-Kohlenstoff-Mehrfachbindung aufweist, wobei das Epoxid mindestens 4 Kohlenstoffatome hat und zusätzlich eine nichtcyclische Ethergruppe enthalten kann, in Gegenwart eines Hydrosilylierungskatalysators in an sich bekannter Weise umgesetzt werden.

Bevorzugt wird die als Hydrosilylierung bekannte Anlagerung von Si-gebundenem Wasserstoff an aliphatische Kohlenstoff-Kohlenstoff-Mehrfachbindung bei Temperaturen von 50 bis 150°C und einem Druck der umgebenden Atmosphäre, also etwa 900 bis 1100 hPa, durchgeführt.

Als Hydrosilylierungskatalysator können die hierfür bekannten Katalysatoren der 8. Nebengruppe, bevorzugt Platinkatalysatoren, insbesondere Hexachloroplatinsäure und tetramethyldivinyldisiloxanhaltige Pt(O)-Komplexe verwendet werden.

Beispiele für die eingesetzten, endständig aliphatisch ungesättigten Epoxide sind

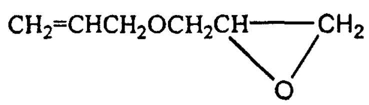 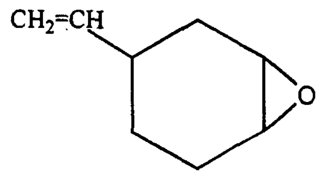 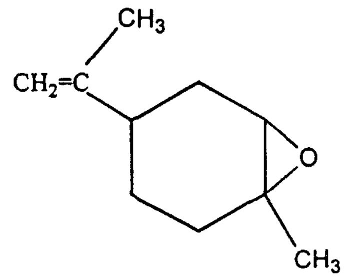

Die erfindungsgemäß hergestellten quaternäre Ammoniumgruppen aufweisenden Organopolysiloxane können - falls erwünscht - nach erfolgter Umsetzung nach allgemein bekannten Verfahren isoliert werden, wie etwa durch Entfernen des Lösungsmittels.

Die erfindungsgemäße Verfahrensvariante 1 hat den Vorteil, daß quaternäre Ammoniumgruppen aufweisende Organopolysiloxane auf einfache Weise und mit hoher Ausbeute hergestellt werden können.

Die erfindungsgemäße Verfahrensvariante 1 hat ferner den Vorteil, daß durch Stöchiometrievariation Stickstoff zu Epoxy die Viskosität gesteuert werden kann.

Ein weiterer Gegenstand der vorliegenden Erfindung ist ein Verfahren (Verfahrensvariante 2) zur Herstellung der erfindungsgemäßen, quaternäre Ammoniumgruppen aufweisenden Organopolysiloxane, dadurch gekennzeichnet, daß in einem ersten Schritt epoxygruppenhaltiges Organopolysiloxan der Formel (III) mit einem primären Amin der Formel $H_2NR^1$ (V) umgesetzt wird und in einem zweiten Schritt das im ersten Schritt erhaltenen Aminosiloxan mit einer Verbindung $R^1X$ umgesetzt wird, wobei $R^1$ und X eine der obengenannten Bedeutungen haben und $R^1$ gleich oder verschieden sein kann.

Im zweiten Schritt der erfindungsgemäßen Verfahrensvariante 2 wird an das Stickstoffatom des im ersten Schritt erhaltenen A-minosiloxans ein Rest $R^1$ eingeführt. Die Einführung dieses Restes $R^1$ durch $R^1X$ soll im Folgenden kurz Alkylierung genannt werden.

Bevorzugt handelt es sich bei der erfindungsgemäß eingesetzten Verbindung (V) um substituierte oder unsubstituierte Alkylamine, wobei unsubstituierte Alkylamine besonders bevorzugt sind.

Bevorzugt handelt es sich bei der als sogenanntes Alkylierungsmittel eingesetzten Verbindung $R^1X$ um $C_6H_5CH_2$-X und $CH_3$-X, wobei X die Bedeutung von Chlorid-, Bromid- oder Iodidion oder $CH_3OSO_3^-$ oder $CH_3C_6H_4SO_3^-$ haben kann.

Vorzugsweise werden im ersten Schritt der erfindungsgemäßen Verfahrensvariante 2 Verbindungen der Formel (III) und der Formel (V) in einer solchen Menge eingesetzt, daß das molare Verhältnis von Epoxygruppen Y zu Amin der Formel (V) bevorzugt im Bereich von 1,6:1 bis 2,2:1 liegt, besonders bevorzugt gleich 2:1 ist.

Die Umsetzung im zweiten Schritt der erfindungsgemäßen Verfahrensvariante 2 erfolgt bevorzugt stöchiometrisch bezüglich Alkylierungsmittel $R^1X$ und Amin der Formel (V). Denkbar sind jedoch auch Stöchiometrien, bei denen das Alkylierungsmittel im Unterschuß bezüglich Amin eingesetzt wird, wenn beispielsweise nur eine Teilquaternierung erfolgen soll.

Die erfindungsgemäße Verfahrensvariante 2 wird vorzugsweise in Anwesenheit von Lösungsmitteln durchgeführt.

Beispiele für solche Lösungsmittel sind polare Lösungsmittel, wie Wasser, Alkohole, Ether und Glykole, aber auch unpolare Lösungsmittel, wie Toluol, und Mischungen aus verschiedenen Lösungsmitteln, wobei polare Lösungsmittel und Mischungen davon bevorzugt und Wasser, Alkohole und Glykole besonders bevorzugt sind.

Falls bei der erfindungsgemäßen Verfahrensvariante 2 Lösungsmittel eingesetzt wird, handelt es sich um Mengen von bevorzugt 5 bis 50 Gewichtsprozent, besonders bevorzugt 20 bis 40 Gewichtsprozent, jeweils bezogen auf das Gesamtgewicht der Reaktionsmischung.

Die erfindungsgemäße Verfahrensvariante 2 wird bei Temperaturen von bevorzugt 60 bis 150°C, besonders bevorzugt von 60 bis 130°C abhängig vom gegebenenfalls eingesetzten Lösungsmittel, und bevorzugt bei einem Druck der umgebenenden Atmosphäre, also etwa 900 bis 1100 hPa, durchgeführt.

Die Verbindungen der Formeln (V) und das Alkylierungsmittel $R^1X$ sind handelsübliche Produkte bzw. nach in der Chemie üblichen Methoden herstellbar.

Die erfindungsgemäß hergestellten quaternäre Ammoniumgruppen aufweisenden Organopolysiloxane können - falls erwünscht - nach erfolgter Umsetzung nach allgemein bekannten Verfahren isoliert werden, wie etwa durch Entfernen des Lösungsmittels.

Die erfindungsgemäße Verfahrensvariante 2 hat den Vorteil, daß quaternäre Ammoniumgruppen aufweisende Organopolysiloxane auf einfache Weise und mit hoher Ausbeute hergestellt werden können.

Die erfindungsgemäße Verfahrensvariante 2 hat ferner den Vorteil, daß es eine Teilquarternierung ermöglicht ohne die Kettenlängen des Systems zu verändern.

Ein weiterer Gegenstand der vorliegenden Erfindung ist ein Verfahren (Verfahrensvariante 3) zur Herstellung der erfindungsgemäßen, quaternäre Ammoniumgruppen aufweisenden Organopolysiloxane, dadurch gekennzeichnet, daß in einer ersten Stufe epoxygruppenhaltiges Organopolysiloxan der Formel (III) mit einem sekundären Amin der Formel $HNR^1_2$ (VI) in einem Molverhältnis Aminogruppen zu Epoxygruppen von kleiner 1, bevorzugt 1:1,8 bis 1: 2,2 besonders bevorzugt 1:2, umgesetzt wird und in einer zweiten Stufe die nicht an der Reaktion beteiligten Epoxyfunktionen mit den in der ersten Stufe erhaltenen tertiären Aminfunktionen unter Zugabe einer Säure HX in einem molaren Verhältnis Aminfunktion zu HX von 0,8:1 bis 1,4:1, bevorzugt 1:1, umgesetzt werden, wobei X eine der obengenannten Bedeutungen hat.

Ein weiterer Gegenstand der vorliegenden Erfindung ist ein Verfahren (Verfahrensvariante 4) zur Herstellung der erfindungsgemäßen, quaternäre Ammoniumgruppen aufweisenden Organopolysiloxane, dadurch gekennzeichnet, daß in einer ersten Stufe epoxygruppenhaltiges Organopolysiloxan der Formel (III) mit einem sekundären Amin der Formel $HNR^1_2$ (VI) in einem Molverhältnis Aminogruppen zu Epoxygruppen von größer oder gleich 1, bevorzugt 50:1 bis 1:1, umgesetzt wird und in einer zweiten Stufe das erhaltene Reaktionsprodukt mit weiterem Epoxysiloxan der Formel (III) unter Zugabe einer Säure HX in einem molaren Verhältnis Aminfunktion zu HX von 0,8:1 bis 1,4:1, bevorzugt 1:1, umgesetzt wird, wobei X eine der obengenannten Bedeutungen hat.

Die erfindungsgemäße Verfahrensvariante 4 ist vor allem dann anzuwenden, wenn das einzusetzende Amin der Formel (VI) bei den angewandten Reaktionsbedingungen ein Gas, wie Dimethylamin, ist.

Bevorzugt handelt es sich bei der erfindungsgemäß eingesetzten Verbindung (VI) um substituierte oder unsubstituierte Alkylamine, wobei Dimethylamin besonders bevorzugt ist.

Die erfindungsgemäßen Verfahrensvarianten 3 und 4 werden jeweils unabhängig voneinander vorzugsweise in Anwesenheit von Lösungsmitteln durchgeführt.'

Beispiele für solche Lösungsmittel sind polare Lösungsmittel, wie Wasser, Alkohole, Ether und Glykole, aber auch unpolare Lösungsmittel, wie Toluol, und Mischungen aus verschiedenen Lösungsmitteln, wobei polare Lösungsmittel und Mischungen davon sowie Toluol bevorzugt und Wasser, Alkohole, Glykole und Toluol besonders bevorzugt sind.

Falls bei der erfindungsgemäßen Verfahrensvariante 3 bzw. 4 Lösungsmittel eingesetzt wird, handelt es sich um Mengen von bevorzugt 5 bis 50 Gewichtsprozent, besonders bevorzugt 20 bis 40 Gewichtsprozent, jeweils bezogen auf das Gesamtgewicht an Epoxysiloxan der Formel (III).

Die erfindungsgemäßen Verfahrensvarianten 3 und 4 werden unabhängig voneinander bei Temperaturen von bevorzugt 60 bis 150°C, besonders bevorzugt von 60 bis 130°C abhängig vom gegebenenfalls eingesetzten Lösungsmittel, und bevorzugt bei einem Druck der umgebenenden Atmosphäre, also etwa 900 bis 1100 hPa, durchgeführt.

Die Verbindungen der Formeln (VI) sowie die Säure HX sind handelsübliche Produkte bzw. nach in der Chemie üblichen Methoden herstellbar.

Die erfindungsgemäß hergestellten quaternäre Ammoniumgruppen aufweisenden Organopolysiloxane können - falls erwünscht - sowohl bei Verfahrensvariante 3 wie auch bei Verfahrensvariante 4 nach erfolgter Umsetzung nach allgemein bekannten Verfahren i-soliert werden, wie etwa durch Entfernen des Lösungsmittels.

Die erfindungsgemäße Verfahrensvariante 3 hat den Vorteil, daß quaternäre Ammoniumgruppen aufweisende Organopolysiloxane auf einfache Weise und mit hoher Ausbeute hergestellt werden können.

Die erfindungsgemäße Verfahrensvariante 4 hat den Vorteil, daß quaternäre Ammoniumgruppen aufweisende Organopolysiloxane auf einfache Weise und mit hoher Ausbeute hergestellt werden können.

Die erfindungsgemäßen quaternäre Ammoniumgruppen aufweisenden Organopolysiloxane werden bevorzugt nach der erfindungsgemäßen Verfahrensvariante 1 oder 2 hergestellt.

Die erfindungsgemäßen bzw. erfindungsgemäß hergestellten quaternäre Ammoniumgruppen aufweisenden Organopolysiloxane können für alle Zwecke eingesetzt werden, für die auch bisher bekannte quaternäre Ammoniumgruppen aufweisende Siloxane eingesetzt worden sind, wie etwa in antibakteriziden oder kosmetischen Zubereitungen oder als Bestandteil von Textilausrüstungen.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

**Herstellung eines α, ω-epoxyhaltigen Organopolysiloxans (Epoxysiloxan I)**

der allgemeinen Formel

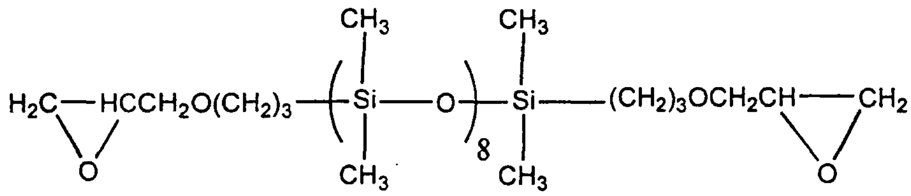

320 g Allylglycidether werden auf 80°C erhitzt und mit 5,3 mg elementarem Platin in Form einer 0,5%igen Lösung von Hexachloroplatinsäure in Dimethoxyethan versetzt. Anschließend werden innerhalb von 30 Minuten 740 g eines α, ω-SiH-haltigen Polydimethylsiloxanes mit einem H%-Gehalt gleich 0,301 zudosiert. Nach weiteren 30 Minuten Reaktionszeit wird das Produkt von überschüssigem Allylglycidether im Vakuum bei 130°C befreit. Es werden 953 g eines α, ω-epoxyhaltigen Organopolysiloxans mit einem Epoxygehalt von 0,243 mol pro 100 g Substanz der angegebenen Formel erhalten.

**Herstellung eines α, ω-epoxyhaltigen Organopolysiloxans (Epoxysiloxan II)**

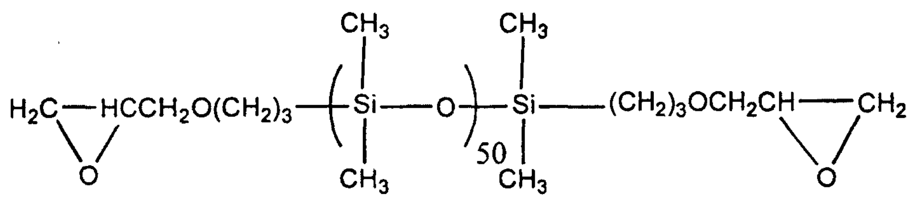

der allgemeinen Formel
320 g Allylglycidether werden auf 80°C erhitzt und mit 20,0 mg elementarem Platin in Form einer 0,5%igen Lösung von Hexachloroplatinsäure in Dimethoxyethan versetzt. Anschließend werden innerhalb von 30 Minuten 3670 g eines SiH-haltigen Polydimethylsiloxanes mit einem H%-Gehalt gleich 0,053 zudosiert. Nach weiteren 30 Minuten Reaktionszeit wird das Produkt von überschüssigem Allylglycidether im Vakuum bei 130°C befreit. Es werden 3870 g eines α,ω-epoxyhaltigen Organopolysiloxans mit einem Epoxygehalt von 0,049 mol pro 100 g Substanz der angegebenen Formel erhalten.

**Beispiel 1** (Verfahrensvariante 1)

6,3 g Dimethylammoniumchlorid werden in einem Gemisch von 33 g Isopropanol und 13 g Wasser gelöst. Anschließend werden unter guter Rührung 60,5 g des oben beschriebenen Epoxysiloxans I zugegeben. Anschließend wird auf Rückfluß erhitzt und bei dieser Temperatur 5,5 Stunden gerührt. Im Anschluß wird das Lösungsmittelgemisch bei 110°C im Hochvakuum entfernt. Es werden 63 g eines gelblichen Produktes mit einer Viskosität von 204 000 mPas erhalten, welches Einheiten der allgemeinen Formel

$$[\text{—B-CH}_2\text{O(CH}_2)_3\text{-(SiMe}_2\text{O)}_8\text{-SiMe}_2\text{-(CH}_2)_3\text{OCH}_2\text{-B—N}^+\text{Me}_2\text{—}]_m \qquad m \cdot Cl^-$$

mit B gleich $-H_2C-CH(OH)-$ oder $-HC(OH)-CH_2-$, Me gleich Methylrest und m im Mittel gleich 5 enthält. Das so hergestellte Organopolysiloxan kann cyclisch als auch linear vorliegen. Für die linearen Typen sind neben -OH auch -Cl und $-N(CH_3)_2$ als Endgruppen nachweisbar.

**Beispiel 2** (Verfahrensvariante 1)

6,3 g Dimethylammoniumchlorid werden in einem Gemisch von 100 g Isopropanol und 40 g Wasser gelöst. Anschließend werden unter guter Rührung 300 g des oben beschriebenen Epoxysiloxans II zugegeben. Anschließend wird auf Rückfluß erhitzt und bei dieser Temperatur 5,5 Stunden gerührt. Im Anschluß wird das Lösungsmittelgemisch bei 110°C im Hochvakuum entfernt. Es werden 302 g eines gelblichen Produktes mit einer Viskosität von 1 900 000 mPas erhalten enthaltend Einheiten der allgemeinen Formel

$$[\text{—B-CH}_2\text{O (CH}_2)_3\text{-(SiMe}_2\text{O)}_{50}\text{-SiMe}_2\text{-(CH}_2)_3\text{OCH}_2\text{-B—N}^+\text{Me}_2\text{—]}_m \ m\cdot Cl^-$$

mit B gleich $-H_2C-CH(OH)-$ oder $-HC(OH)-CH_2-$, Me gleich Methylrest und m gleich 9. Das so erhaltene Organopolysiloxan kann cyclisch als auch linear vorliegen. Für die linearen Typen sind neben -OH auch -Cl und $-N(CH_3)_2$ als Endgruppen nachweisbar.

**Beispiel 3** (Verfahrensvariante 2)

6,3 g n-Butylamin werden mit 100 g Isopropanol und 300 g des oben beschriebenen Epoxysiloxans II auf Rückfluß erhitzt und bei dieser Temperatur (ca. 86°C) drei Stunden gerührt. Anschließend wird das Lösungsmittel bei 110°C im Vollvakuum entfernt.
100 g von diesem Rohprodukt mit einer Viskosität von 2800 $mm^2/s$ werden in 50 g Isopropanol gegeben und mit 5,1 g Methyl-4-toluolsulfonat versetzt und auf 50°C erhitzt. Nach 5,5 Stunden Reaktionszeit bei 60°C wird das Lösungsmittel im Vakuum bei 110°C entfernt. Es werden 102 g eines gelblichen Produktes mit einer Viskosität von 340 000 mPas erhalten enthaltend Einheiten der allgemeinen Formel

$$[\text{—B-CH}_2\text{O(CH}_2)_3\text{-(SiMe}_2\text{O)}_{50}\text{-SiMe}_2\text{-(CH}_2)_3\text{OCH}_2\text{-B—}\underset{}{\overset{(CH_2)_3Me}{N^+}}\text{Me—]}_m \quad m\cdot MeC_6H_5SO_3^-$$

mit B gleich $-H_2C-CH(OH)-$ oder $-HC(OH)-CH_2-$, Me gleich Methylrest und m gleich 11. Das so erhaltene Organopolysiloxan kann cyclisch als auch linear vorliegen. Für die linearen Typen sind neben -OH auch $-CH_3NH^+(CH_2)_3CH_3$, $-NH(CH_2)_3CH_3$ und $-SO_3C_6H_5CH_3$ als Endgruppen nachweisbar.

**Beispiel 4** (Verfahrensvariante 4)

150 g des oben beschriebenen Epoxysiloxans II werden mit 100 g Isopropanol auf 75°C erhitzt. Auf den Reaktionskolben wird ein mit Trockeneis-Aceton gekühlter Kondensator gesetzt. In die Reaktionslösung wird 4 Stunden lang langsam Dimethylamin eingeleitet, so daß ein Rückfluß entsteht und die Reaktionstemperatur nicht unter 70°C fällt. Anschließend wird überschüßiges Dimethylamin und das Lösungsmittel bei 110°C im Vollvakuum entfernt. Zu diesem Rohprodukt werden wieder 100 g Isopropanol, 150 g des oben beschriebenen Epoxysiloxans II und 7,24 g einer 37 %igen HCl und 40 g Wasser gegeben. Es wird auf Rückfluß erhitzt, und nach 5,5 Stunden Reaktionszeit am Rückfluß wird das Lösungsmittel im Vakuum bei 110°C entfernt. Es werden 303 g eines gelblichen Produktes mit einer Viskosität von 240 000 mPas erhalten enthaltend Einheiten der allgemeinen Formel

$$[\text{—B-CH}_2\text{O(CH}_2)_3\text{-(SiMe}_2\text{O)}_{50}\text{-SiMe}_2\text{-(CH}_2)_3\text{OCH}_2\text{-B—}\overset{+}{N}\text{Me}_2\text{—]}_m \quad m\cdot Cl^-$$

mit B gleich $-H_2C-CH(OH)-$ oder $-HC(OH)-CH_2-$, Me gleich Methylrest und m gleich 7. Das so erhaltene Organopolysiloxan kann cyclisch als auch linear vorliegen. Für die linearen Typen sind neben -OH auch -Cl und $-N(CH_3)_2$ als Endgruppen nachweisbar.

## Patentansprüche

1. Quaternäre Ammoniumgruppen aufweisende Organopolysiloxane **dadurch gekennzeichnet, daß** es sich um solche der allgemeinen Formel

$$D^1{}_a\text{-}[R^2\text{-}(SiR_2\text{-}O)_b\text{-}SiR_2\text{-}R^2\text{-}N^+R^1{}_2]_n\text{-}D^2{}_a \quad \cdot n\,X^- \qquad (I)$$

handelt, wobei
R gleich oder verschieden sein kann und einen einwertigen, SiCgebundenen, gegebenenfalls substituierten Kohlenwasserstoffrest mit 1 bis 12 Kohlenstoffatomen bedeutet,
$R^1$ gleich oder verschieden sein kann und einen einwertigen, gegebenenfalls substituierten Kohlenwasserstoffrest mit 1 bis 12 Kohlenstoffatomen bedeutet oder Bestandteil eines verbrückenden Alkylenrestes sein kann,
$X^-$ ein organisches oder anorganisches Anion darstellt,
$R^2$ einen zweiwertigen Kohlenwasserstoffrest mit mindestens 4 Kohlenstoffatomen darstellt, der mindestens eine Hydroxylgruppe enthält und von einem oder mehreren Sauerstoffen unterbrochen sein kann,
a 0 oder 1 ist,
b eine ganze Zahl von 1 bis 200 ist,
n eine ganze Zahl von 1 bis 50 ist,
$D^1$ ein Wasserstoffatom, Hydroxylrest, Halogenidrest, $NH_2$-Rest oder einen einwertigen organischen Rest bedeutet und
$D^2$ eine Gruppe der Formel

$$-R^2-(SiR_2O)_b-SiR_2-R^2-D^1 \quad (II)$$

ist mit R, $R^2$, $D^1$ und b gleich der obengenannten Bedeutung.

**2.** Quaternäre Ammoniumgruppen aufweisende Organopolysiloxane gemäß Anspruch 1, **dadurch gekennzeichnet, daß** a gleich 1 ist.

**3.** Quaternäre Ammoniumgruppen aufweisende Organopolysiloxane gemäß einem oder mehreren der Ansprüche 1 bis 2, **dadurch gekennzeichnet, daß** R die Bedeutung von Methylrest hat.

**4.** Verfahren zur Herstellung von quaternäre Ammoniumgruppen aufweisenden Organopolysiloxanen gemäß einem oder mehreren der Ansprüche 1 bis 3 durch Umsetzung von $\alpha$, $\omega$-epoxyterminierten Organopolysiloxanen mit Stickstoffverbindungen, ausgewählt aus primären Aminen, sekundären Aminen sowie Salzen von sekundären Aminen.

**5.** Verfahren nach Anspruch 4 (Verfahrensvariante 1), **dadurch gekennzeichnet, daß** epoxygruppenhaltiges Organopolysiloxan der Formel

$$Y-(SiR_2-O)_b-SiR_2-Y \quad (III),$$

wobei R und b die obengenannte Bedeutung haben und Y einen epoxydhaltigen Rest darstellt, direkt mit dem Salz eines sekundären Amins der Formel

$$H_2NR^1{}_2{}^+ X^- \quad (IV)$$

mit $R^1$ und $X^-$ gleich der obengenannten Bedeutung umgesetzt wird.

**6.** Verfahren nach Anspruch 4 (Verfahrensvariante 2), **dadurch gekennzeichnet, daß** in einem ersten Schritt epoxygruppenhaltiges Organopolysiloxan der Formel (III) mit einem primären Amin der Formel $H_2NR^1$ (V) umgesetzt wird und in einem zweiten Schritt das im ersten Schritt erhaltenen Aminosiloxan mit einer Verbindung $R^1X$ umgesetzt wird, wobei $R^1$ und X eine der obengenannten Bedeutungen haben und $R^1$ gleich oder verschieden sein kann.

**7.** Verfahren nach Anspruch 4 (Verfahrensvariante 3), **dadurch gekennzeichnet, daß** in einer ersten Stufe epoxygruppenhaltiges Organopolysiloxan der Formel (III) mit einem sekundären Amin der Formel $HNR^1{}_2$ (VI) in einem Molverhältnis Aminogruppen zu Epoxygruppen von kleiner 1, bevorzugt 1:1,8 bis 1:2,2 besonders bevorzugt 1:2, umgesetzt wird und in einer zweiten Stufe die nicht an der Reaktion beteiligten Epoxyfunktionen mit den in der ersten Stufe erhaltenen tertiären Aminfunktionen unter Zugabe einer Säure HX in einem molaren Verhältnis Aminfunktion zu HX von 0,8:1 bis 1,4:1, bevorzugt 1:1, umgesetzt werden, wobei X eine der obengenannten Bedeutungen hat.

**8.** Verfahren nach Anspruch 4 (Verfahrensvariante 4), **dadurch gekennzeichnet, daß** in einer ersten Stufe epoxygruppenhaltiges Organopolysiloxan der Formel (III) mit einem sekundären Amin der Formel $HNR^1_2$ (VI) in einem Molverhältnis Aminogruppen zu Epoxygruppen von größer oder gleich 1, bevorzugt 50:1 bis 1:1, umgesetzt wird und in einer zweiten Stufe das erhaltene Reaktionsprodukt mit weiterem Epoxysiloxan der Formel (III) unter Zugabe einer Säure HX in einem molaren Verhältnis Aminfunktion zu HX von 0,8:1 bis 1,4:1, bevorzugt 1:1, umgesetzt wird, wobei X eine der obengenannten Bedeutungen hat.

## Claims

**1.** Organopolysiloxanes having quaternary ammonium groups, **characterized in that** they have the general formula

$$D^1{}_a\text{-}[R^2\text{-}(SiR_2\text{-}O)_b\text{-}SiR_2\text{-}R^2\text{-}N^+R^1{}_2]_n\text{-}D^2{}_a \quad \cdot\, n\, X^- \qquad \text{(I)}$$

where
R may be identical or different and is a monovalent, SiC-bonded, optionally substituted hydrocarbon radical having 1 to 12 carbon atoms,
$R^1$ may be identical or different and is a monovalent, optionally substituted hydrocarbon radical having 1 to 12 carbon atoms or may be a constituent of a bridging alkylene radical,
$X^-$ is an organic or inorganic anion,
$R^2$ is a divalent hydrocarbon radical having at least 4 carbon atoms which contains at least one hydroxyl group and may be interrupted by one or more oxygens,
a is 0 or 1,
b is an integer from 1 to 200,
n is an integer from 1 to 50,
$D^1$ is a hydrogen atom, hydroxyl radical, halide radical, $NH_2$ radical or a monovalent organic radical and
$D^2$ is a group of the formula

$$\text{-}R^2\text{-}(SiR_2O)_b\text{-}SiR_2\text{-}R_2\text{-}D^1 \qquad \text{(II)}$$

where R, $R^2$, $D^1$ and b have the meanings given above.

**2.** Organopolysiloxanes having quaternary ammonium groups according to Claim 1, **characterized in that** a is 1.

**3.** Organopolysiloxanes having quaternary ammonium groups according to one or more of Claims 1 to 2, **characterized in that** R has the meaning of methyl radical.

**4.** Process for the preparation of organopolysiloxanes having quaternary ammonium groups according to one or more of Claims 1 to 3 by reacting α, ω-epoxy-terminated organopolysiloxanes with nitrogen compounds, chosen from primary amines, secondary amines and salts of secondary amines.

**5.** Process according to Claim 4 (process variant 1), **characterized in that** epoxy group-containing organopolysiloxane of the formula

$$Y\text{-}(SiR_2\text{-}O)_b\text{-}SiR_2\text{-}Y \qquad \text{(III)}$$

where R and b have the meanings given above and Y is an epoxide-containing radical,
is reacted directly with the salt of a secondary amine of the formula

$$H_2NR^1{}_2{}^+\, X^- \qquad \text{(IV)}$$

where $R^1$ and $X^-$ have the meanings given above.

6. Process according to Claim 4 (process variant 2), **characterized in that**, in a first step, epoxy group-containing organopolysiloxane of the formula (III) is reacted with a primary amine of the formula $H_2NR^1$ (V) and, in a second step, the aminosiloxane obtained in the first step is reacted with a compound $R^1X$, where $R^1$ and X have the meanings given above and $R^1$ may be identical or different.

7. Process according to Claim 4 (process variant 3), **characterized in that**, in a first stage, epoxy group-containing organopolysiloxane of the formula (III) is reacted with a secondary amine of the formula $HNR^1_2$ (VI) in a molar ratio of amino groups to epoxy groups of less than 1, preferably 1:1.8 to 1:2.2, particularly preferably 1:2, and, in a second stage, the epoxy functions which have not taken part in the reaction are reacted with the tertiary amine functions obtained in the first stage, with the addition of an acid HX in a molar ratio of amine function to HX of from 0.8:1 to 1.4:1, preferably 1:1, where X has one of the abovementioned meanings.

8. Process according to Claim 4 (process variant 4), **characterized in that**, in a first stage, epoxy group-containing organopolysiloxane of the formula (III) is reacted with a secondary amine of the formula $HNR^1_2$ (VI) in a molar ratio of amino groups to epoxy groups of greater than or equal to 1, preferably 50:1 to 1:1, and, in a second stage, the resulting reaction product is reacted with further epoxysiloxane of the formula (III) with the addition of an acid HX in a molar ratio of amine function to HX of from 0.8:1 to 1.4:1, preferably 1:1, where X has one of the abovementioned meanings.

## Revendications

1. Organopolysiloxanes présentant des groupes d'ammonium quaternaire, **caractérisés en ce qu'**il s'agit d'organopolysiloxanes de formule générale

$$D^1{}_a\text{-}[R^2\text{-}(SiR_2\text{-}O)_b\text{-}SiR_2\text{-}R^2\text{-}N{+}R^1{}_2]_n\text{-}D^2{}_a.n\ X^- \quad (I)$$

dans laquelle
R peut être identique ou différent et signifie un radical hydrocarboné monovalent, lié par SiC, le cas échéant substitué, comprenant 1 à 12 atomes de carbone,
$R^1$ peut être identique ou différent et signifie un radical hydrocarboné monovalent, le cas échéant substitué comprenant 1 à 12 atomes de carbone ou un constituant d'un radical alkylène formant un pont,
$X^-$ représente un anion organique ou inorganique,
$R^2$ représente un radical hydrocarboné divalent, comprenant au moins 4 atomes de carbone, qui contient au moins un groupe hydroxyle et qui peut être interrompu par un ou plusieurs atomes d'oxygène,
a représente 0 ou 1,
b représente un nombre entier de 1 à 200,
n représente un nombre entier de 1 à 50,
$D^1$ signifie un atome d'hydrogène, un radical hydroxyle, un radical halogénure, un radical $NH_2$ ou un radical organique monovalent et
$D^2$ représente un groupe de formule

$$-R^2\text{-}(SiR_2O)_b\text{-}SiR_2\text{-}R^2\text{-}D^1 \quad (II)$$

avec R, $R^2$, $D^1$ et b ayant la signification susmentionnée.

2. Organopolysiloxanes présentant des groupes d'ammonium quaternaire selon la revendication 1, **caractérisés en ce que** a représente 1.

3. Organopolysiloxanes présentant des groupes d'ammonium quaternaire selon l'une ou plusieurs des revendications 1 à 2, **caractérisés en ce que** R signifie le radical méthyle.

4. Procédé pour la préparation d'organopolysiloxanes présentant des groupes ammonium quaternaire selon l'une ou plusieurs des revendications 1 à 3 par transformation d'organopolysiloxanes $\alpha$, $\omega$-terminés par époxy avec des composés d'azote, choisis parmi les amines primaires, secondaires ainsi que les sels d'amines secondaires.

**5.** Procédé selon la revendication 4 (variante de procédé 1), **caractérisé en ce que** l'organopolysiloxane contenant des groupes époxy, de formule

$$Y\text{-}(SiR_2\text{-}O)_b\text{-}SiR_2\text{-}Y \qquad (III)$$

où R et b ont la signification susmentionnée et Y représente un radical époxyde, est transformé directement avec le sel d'une amine secondaire de formule

$$H_2NR^1{}_2{}^+X^- \qquad (IV)$$

avec $R^1$ et $X^-$ ayant la signification susmentionnée.

**6.** Procédé selon la revendication 4 (variante de procédé 2) **caractérisé en ce que** dans une première étape, on transforme l'organopolysiloxane contenant des groupes époxy de formule (III) avec une amine primaire de formule $H_2NR^1$ (V) et on transforme, dans une deuxième étape, l'aminosiloxane obtenu dans la première étape avec un composé $R^1X$, $R^1$ et X ayant les significations susmentionnées et $R^1$ pouvant être identique ou différent.

**7.** Procédé selon la revendication 4 (variante de procédé 3), **caractérisé en ce que** dans une première étape, on transforme l'organopolysiloxane contenant des groupes époxy de formule (III) avec une amine secondaire de formule $HNR^1{}_2$ (VI) dans un rapport molaire groupes amino à groupe époxy inférieur à 1, de préférence de 1:1,8 à 1:2,2, de manière particulièrement préférée de 1:2, et, dans une deuxième étape, on transforme les fonctions époxy qui n'ont pas participé à la réaction avec les fonctions amine tertiaire obtenues dans la première étape avec addition d'une acide HX dans un rapport molaire de fonction amine à HX de 0,8:1 à 1,4:1, de préférence de 1:1, X ayant une des significations susmentionnées.

**8.** Procédé selon la revendication 4 (variante de procédé 4), **caractérisé en ce qu'**on transforme, dans une première étape l'organopolysiloxane contenant des groupes époxy de formule (III) avec une amine secondaire de formule $HNR^1{}_2$ (VI) dans un rapport molaire des groupes amino aux groupes époxy supérieur ou égal à 1, de préférence de 50:1 à et, dans une deuxième étape, le produit de réaction obtenu avec de l'époxysilane supplémentaire de formule (III) avec addition d'un acide HX dans un rapport molaire de fonction amine à HX de 0,8:1 à 1,4:1, de préférence de 1:1, X ayant une des significations susmentionnées.